(19) Europäisches Patentamt
European Patent Office
Office européen des brevets

(11) **EP 1 168 890 A1**

(12) **DEMANDE DE BREVET EUROPEEN**

(43) Date de publication:
**02.01.2002 Bulletin 2002/01**

(51) Int Cl.⁷: **H05B 6/68**

(21) Numéro de dépôt: **01401574.7**

(22) Date de dépôt: **15.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **20.06.2000 FR 0007857**

(71) Demandeur: **Brandt Cooking**
**45140 Saint Jean de la Ruelle (FR)**

(72) Inventeur: **Oudart, Pascal**
**45240 La Ferte Saint Aubin (FR)**

(74) Mandataire: **Rinuy, Santarelli**
**14, avenue de la Grande Armée, B.P. 237**
**75822 Paris Cédex 17 (FR)**

(54) **Procédé et appareil de chauffage d'un aliment à une température de consigne**

(57) Un appareil de chauffage (1) comprend des moyens de mesure à distance (5) d'une température initiale de l'aliment à chauffer contenu dans un récipient (4).

Il comprend des moyens de sélection (6) d'une température de consigne pour le chauffage de l'aliment, des moyens de détermination (7, 8) du volume de l'aliment dans le récipient (4) et des moyens d'estimation (13) du temps de chauffage nécessaire pour amener l'aliment de sa température initiale à la température de consigne, en fonction du volume de cet aliment et de la puissance de l'élément chauffant (2).

Utilisation notamment pour chauffer du lait dans un biberon (4) dans un four à micro-ondes (1).

Fig. 1

## Description

La présente invention concerne un procédé de chauffage d'un aliment prédéterminé à une température de consigne.

Elle concerne également un appareil de chauffage d'un aliment, adapté à mettre en oeuvre le procédé de chauffage conforme à l'invention.

Cet appareil de chauffage est de préférence un four de cuisson à micro-onde permettant de réchauffer des aliments, et notamment du lait ou de l'eau contenus dans un biberon.

Lorsque l'on souhaite réchauffer des aliments dans un four à micro-onde, il n'est pas possible d'utiliser une sonde de température dans l'enceinte de cuisson, car le fonctionnement de cette sonde serait influencé par la présence du champ excitateur des micro-ondes.

Par ailleurs, même en l'absence de micro-ondes, dans des systèmes de réchauffage traditionnels, il est parfois nécessaire d'éviter que l'aliment à réchauffer ou à cuire puisse venir en contact direct avec une sonde pour des raisons sanitaires.

Si l'on veut réchauffer un aliment à une température de consigne prédéterminée, il est cependant nécessaire de mesurer sa température en continu afin d'asservir le fonctionnement des moyens de chauffage à cette mesure de température.

On utilise aujourd'hui des moyens optiques, permettant de mesurer le niveau de rayonnement infrarouge émis par la surface de l'aliment à réchauffer, ces moyens optiques permettant de mesurer sans contact la température à la surface de l'aliment.

Cependant, lors du réchauffage de l'aliment, notamment dans un four micro-onde, la température de l'aliment n'est pas homogène. Ce phénomène est amplifié lorsque l'aliment forme une épaisseur non négligeable à l'intérieur du récipient le contenant.

Aussi, la température de surface mesurée par les moyens optiques classiques n'est pas représentative de la température au coeur de l'aliment.

Si les moyens de chauffage sont asservis à cette mesure de température, seule la température de surface de l'aliment est réellement mesurée et non celle de l'aliment à coeur.

La présente invention propose un procédé et un appareil de chauffage d'un aliment prédéterminé qui permette d'amener cet aliment à une température de consigne sans contact physique avec l'aliment ou le récipient le contenant.

Le procédé de chauffage visé par la présente invention comporte une étape de mesure à distance d'une température initiale de l'aliment à chauffer.

Conformément à l'invention, ce procédé de chauffage comprend les étapes suivantes :

- détermination d'un volume d'aliment à chauffer ; et
- estimation d'une durée de chauffage en fonction de l'écart entre la température de consigne et la température initiale, du volume dudit aliment et de la puissance d'un élément chauffant.

Ainsi, le procédé de chauffage conforme à l'invention permet d'asservir le temps de chauffage de l'aliment à deux informations : la température initiale de l'aliment, celle-ci étant homogène au départ car l'aliment est à un équilibre thermique, et le volume d'aliment à chauffer.

En asservissant le chauffage de l'aliment à la quantité d'aliments à chauffer, on peut chauffer l'aliment de composition connue à la température de consigne prédéterminée, quelle que soit son épaisseur dans le récipient et l'inhomogénéité de la température en cours de chauffage.

Corrélativement, la présente invention concerne également un appareil de chauffage d'un aliment, comprenant une enceinte de chauffage, un élément chauffant adapté à chauffer ledit aliment et des moyens de mesure à distance d'une température initiale dudit aliment à chauffer.

Conformément à l'invention, cet appareil de chauffage comprend :

- des moyens de sélection d'une température de consigne pour le chauffage de l'aliment ;
- des moyens de détermination d'un volume d'aliment à chauffer ; et
- des moyens d'estimation d'une durée de chauffage en fonction de l'écart entre la température de consigne et la température initiale, du volume dudit aliment et de la puissance dudit élément chauffant.

Cet appareil de chauffage présente des avantages analogues à ceux énoncés ci-dessus pour le procédé de chauffage conforme à l'invention.

Selon une caractéristique préférée de l'invention, à l'étape de détermination de volume, on mesure le niveau de remplissage d'un récipient de forme prédéfinie contenant ledit aliment.

Ainsi, en utilisant un récipient de forme prédéfinie, la simple mesure du niveau du remplissage de ce récipient permet d'obtenir le volume ou la quantité d'aliment contenu dans le récipient.

Selon une caractéristique préférée de l'invention, cette mesure de niveau de remplissage est effectuée en mesurant la- distance séparant la surface de l'aliment dans le récipient de forme prédéfinie et des moyens d'émission et de réception d'une onde ultrasonore.

Cette mesure de distance, à l'aide de l'émission d'une onde ultrasonore, permet de déterminer le niveau de remplissage d'un récipient de forme prédéfinie, et par conséquent le volume d'aliment contenu dans ce récipient, sans contact physique avec l'aliment ou le récipient.

En outre, cette mesure ne demande aucune intervention à l'utilisateur et peut être mise en oeuvre de manière automatique dans un appareil de chauffage.

A cet effet, l'appareil de chauffage conforme à l'invention comporte un émetteur et un récepteur d'ondes ultrasonores.

Selon un mode de réalisation particulièrement avantageux de l'invention, relativement simple à mettre en oeuvre, l'étape de détermination de volume comprend les sous-étapes suivantes :

- émission d'une onde ultrasonore en direction de la surface de l'aliment ;
- réception d'une onde ultrasonore réfléchie par ladite surface de l'aliment ;
- mesure de l'intervalle de temps séparant l'émission de la réception de l'onde ultrasonore ; et
- calcul de la distance séparant la surface de l'aliment dans le récipient de forme prédéfinie et les moyens d'émission et de réception de l'onde ultrasonore, à partir de l'intervalle de temps mesuré et de la vitesse du son.

Selon une autre caractéristique préférée de l'invention, l'estimation de la durée de chauffage est réalisée par interpolation d'au moins une courbe obtenue pour un élément chauffant et une température initiale prédéterminée, liant le temps par degré d'élévation de température au volume dudit aliment prédéterminé.

Cette courbe permettant l'interpolation du temps de chauffage peut être obtenue expérimentalement et permet d'adapter le procédé de chauffage à l'efficacité de l'élément chauffant utilisé dans l'appareil de chauffage.

Il permet de s'affranchir des problèmes de répartition de puissance non homogène et de rendement.

Selon une autre caractéristique préférée de l'invention, l'appareil de chauffage conforme à l'invention comprend des moyens de positionnement d'un récipient de forme prédéfinie dans l'enceinte de chauffage.

Ces moyens de positionnement permettent de s'assurer que le récipient contenant l'aliment est toujours disposé à distance fixe des moyens d'émission et de réception d'ondes ultrasonores permettant de mesurer le niveau de remplissage du récipient.

Avantageusement, les moyens de positionnement sont adaptés à positionner le récipient sensiblement au droit d'un émetteur et d'un récepteur d'ondes ultrasonores et des moyens de mesure à distance de la température initiale.

Ce positionnement coaxial du récipient et des émetteur et récepteur d'ondes ultrasonores permet d'éviter que l'onde ultrasonore ne soit réfléchie par le bord du récipient, ce qui fausserait la mesure du niveau de remplissage du récipient.

Dans un mode de réalisation particulièrement avantageux de l'invention, dans lequel le procédé de chauffage est bien adapté à chauffer un aliment à une température de consigne, l'élément chauffant de l'appareil de chauffage est un générateur de micro-ondes.

Le procédé de chauffage conforme à l'invention est particulièrement intéressant pour chauffer un biberon de lait, pour lequel il est préférable qu'aucun moyen de mesure ne vienne en contact avec le lait ou le biberon pour des raisons sanitaires.

D'autres particularités et avantages de l'invention apparaîtront encore dans la description ci-après.

Aux dessins annexés, donnés à titre d'exemples non limitatifs :

- la figure 1 illustre schématiquement un appareil de chauffage conforme à un premier mode de réalisation de l'invention ;
- la figure 2 est un schéma explicatif de l'étape de détermination de volume du procédé de chauffage conforme à l'invention, selon le premier mode de réalisation de l'invention ;
- la figure 3 illustre des courbes d'émission et de réception d'une onde ultrasonore utilisée dans l'étape de détermination de volume illustrée à la figure 2 ;
- la figure 4 illustre des courbes obtenues à des températures initiales différentes et liant le temps par degré d'élévation de température au volume d'aliment à chauffer ; et
- la figure 5 est une vue analogue à la figure 2 illustrant un deuxième mode de réalisation de l'invention.

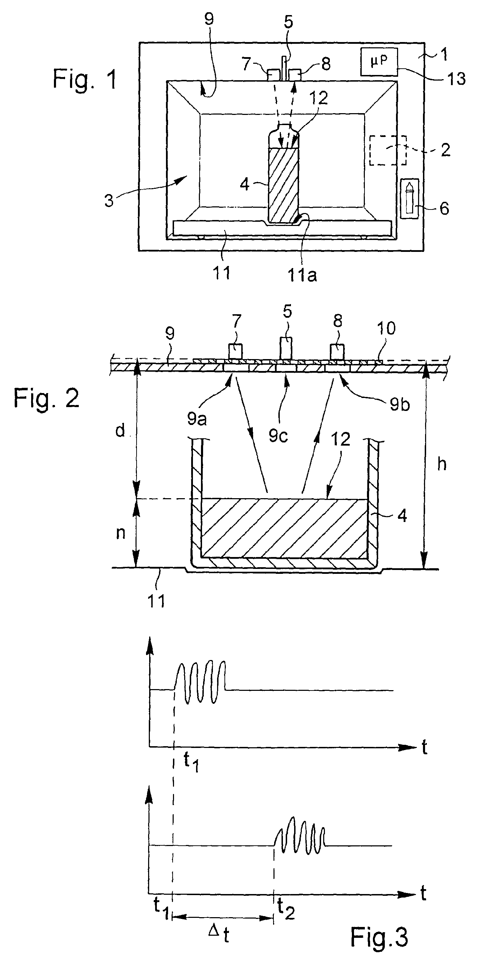

On va décrire tout d'abord, en référence à la figure 1, un appareil de chauffage conforme à un premier mode de réalisation de la présente invention.

Ici, et de manière non limitative, cet appareil de chauffage est un four à micro-onde 1 comprenant un générateur de micro-ondes 2 adapté à générer de manière connue un champ excitateur de micro-ondes permettant de chauffer les aliments contenus dans le four par agitation moléculaire.

Le four à micro-onde 1 comprend une enceinte de chauffage 3 dans laquelle on place l'aliment, généralement dans un récipient, que l'on souhaite chauffer.

Ici, à titre d'exemple, on considère un biberon de lait 4 que l'on souhaite porter à une température de consigne, égale par exemple à 40°C.

A cet effet, le four à micro-onde 1 peut comporter en tant qu'accessoire un biberon 4 de forme prédéfinie.

Généralement, ce biberon 4 forme un récipient sensiblement cylindrique de section transversale circulaire constante.

Le four à micro-onde 1 comprend des moyens de mesure à distance de la température de l'aliment à chauffer.

Ces moyens de mesure à distance 5 d'une température peuvent être constitués de manière classique d'une thermopile, qui est sensible à la température de l'aliment contenu dans le biberon 4 et non à la distance entre cet aliment et la thermopile 5.

De manière classique, cette thermopile 5 permet de mesurer, sans contact avec l'aliment, la température de l'aliment à partir du rayonnement infrarouge émis par la surface de l'aliment contenu dans le biberon 4. La thermopile 5 génère un signal électrique proportionnel à la quantité de rayonnement reçu, ce qui permet de déduire la température de l'aliment.

Le four à micro-onde 1 comprend en outre des moyens de sélection d'une température de consigne Tc, ici fixée par exemple à 40°C.

Ces moyens de sélection peuvent être constitués d'un bouton de commande 6 pour lequel est préprogrammée dans le four la température de consigne souhaitée. L'actionnement de ce bouton de commande 6 peut permettre à la fois de déterminer la température de consigne Tc et de commander le fonctionnement du four pour chauffer l'aliment.

Bien entendu, d'autres moyens de sélection peuvent être prévus, tel qu'un clavier associé à un écran de visualisation, permettant à un utilisateur de programmer la température de consigne Tc souhaitée.

Le four à micro-onde 1 comprend également ici un émetteur 7 et un récepteur 8 associés d'ondes ultrasonores.

L'émetteur 7 d'ondes ultrasonores permet d'émettre des ultrasons à une fréquence de 40 KHz, et de longueur d'onde égale sensiblement à 0,8 cm.

L'émetteur 7 et le récepteur 8 d'ondes ultrasonores sont disposés derrière une paroi supérieure 9 de l'enceinte de chauffage 3.

La thermopile 5 est généralement également disposée dans la partie supérieure de l'enceinte de chauffage 3.

Comme illustré à la figure 2, la paroi supérieure 9 comprend des ouvertures 9a, 9b, 9c derrière lesquelles sont positionnés l'émetteur 7, le récepteur 8 et la thermopile 5.

Une grille 10 formant piège d'ondes vis à vis des micro-ondes est placée entre la paroi supérieure 9 percée d'ouvertures 9a, 9b, 9c et l'émetteur 7, le récepteur 8 et la thermopile 5 afin d'éviter la fuite de micro-ondes hors de l'enceinte de chauffage 3.

De préférence, afin d'obtenir un bon fonctionnement du four à micro-onde, ce dernier comprend des moyens de positionnement du récipient de forme prédéfinie 4 dans l'enceinte de chauffage 3.

Ces moyens de positionnement comportent ici un plateau de support 11 ayant sensiblement en son centre une forme emboutie 11a adaptée à recevoir le biberon 4.

Cette forme emboutie 11a permet de positionner le biberon 4 sensiblement au droit de l'émetteur 7 et du récepteur 8 d'ondes ultrasonores.

Ainsi, la surface 12 de l'aliment contenu dans le biberon 4 est disposée sous l'émetteur 7 et le récepteur 8 d'ondes ultrasonores.

Enfin, le four micro-onde 1 conforme à l'invention comprend des moyens d'estimation d'une durée de chauffage à partir des éléments fournis par les moyens de sélection 6 de la température de consigne Tc, de la température initiale Ti fournie par la thermopile 5 et des mesures effectuées par l'émetteur 7 et le récepteur 8 d'ondes ultrasonores.

Ces moyens d'estimation d'une durée de chauffage peuvent être constitués d'un microprocesseur classique 13 dont le fonctionnement sera mieux compris dans la description ci-après du procédé de chauffage conforme à l'invention.

On va décrire à présent, en référence aux figures 2 à 4, le procédé de chauffage conforme à un mode de réalisation de l'invention qui permet de chauffer un aliment prédéterminé, ici du lait, à une température de consigne Tc fixée par l'utilisateur, par exemple égale 40°C.

On place ainsi le lait dans un récipient de forme définie, ici un biberon 4. Grâce à la thermopile 5, la température initiale Ti du lait à chauffer est mesurée.

Au départ, la température de l'aliment dans le biberon 4 est sensiblement uniforme, et l'utilisation d'une thermopile, mesurant la température de la surface apparente 12 du lait dans le biberon 4, permet d'obtenir une estimation correcte de la température initiale Ti de l'ensemble du lait dans le biberon 4.

Typiquement, cette température peut être sensiblement également à la température ambiante, de l'ordre de 22°C, ou réfrigérée de l'ordre de 8°C.

Le volume d'aliment à chauffer, c'est-à-dire le volume de lait contenu dans le biberon 4, est ensuite déterminé.

Pour cela, grâce à l'utilisation d'un récipient de forme prédéfinie du type du biberon 4, ce volume peut être déterminé par une simple mesure du niveau de remplissage n à l'intérieur du biberon 4.

Cette mesure du niveau de remplissage n est effectuée ici en mesurant la distance d séparant la surface 12 du lait dans le biberon 4 des moyens d'émission et de réception 7, 8 de l'onde ultrasonore.

Si on connaît la hauteur totale h séparant les moyens d'émission et de réception 7, 8 du socle 11 sur lequel est posé le biberon 4, la distance d ainsi mesurée permet d'obtenir la valeur du niveau de remplissage n par une simple soustraction :

$$n=h-d$$

Comme illustré à la figure 3, afin de déterminer le volume et la valeur de la distance d, on réalise les étapes suivantes :

On émet tout d'abord par l'émetteur 7 une impulsion ultrasonore en direction de la surface 12 de l'aliment.

Comme illustré sur la courbe supérieure de la figure 3, une impulsion ultrasonore, de fréquence sensiblement égale à 40 Khz, est émise à un instant $t_1$ pendant une courte période de temps, par exemple égale à 100 microsecondes.

Cette impulsion ultrasonore est transmise en direction de la surface 12 du lait puis réfléchie par cette surface 12 en direction du récepteur 8.

L'écho ainsi renvoyé par la surface de lait 12 est reçu par les moyens de réception 8 à un instant $t_2$.

On mesure ensuite l'intervalle de temps $\Delta t$ séparant l'émission de la réception de l'onde ultrasonore.

Ici, avec les notations de la figure 3, $\Delta t = t_2 - t_1$.

On peut ainsi calculer la distance d à partir de cet intervalle de temps $\Delta t$, assimilable au retard entre l'émission et l'écho de l'onde ultrasonore, et la vitesse du son.

Sachant que le son se propage dans l'air à une vitesse constante d'environ 340 mètres par seconde, le délai de propagation de l'écho $\Delta t$ est égal à :

$$\Delta t = \frac{d \times 2}{340}$$

Ainsi, la mesure de $\Delta t$ permet de calculer la valeur d de la distance séparant les moyens d'émission et de réception 7, 8 de la surface apparente 12 du lait dans le biberon 4.

Comme décrit précédemment, cette mesure d et la hauteur totale h de l'enceinte 3 permettent de déduire le niveau de remplissage n de lait dans le biberon 4.

Le récipient ou biberon 4 ayant une forme prédéfinie, on obtient le volume V de lait contenu dans le biberon 4 en multipliant le niveau de remplissage n par la surface de la section transversale du biberon qui est constante : $V = f(n)$.

Afin d'augmenter la fiabilité de la mesure de cette distance d, on peut effectuer plusieurs mesures successives du délai entre l'émission d'une impulsion ultrasonore et la réception de l'écho généré par la surface du lait.

On peut mesurer une valeur moyenne de cet intervalle de temps $\Delta t$ en effectuant plusieurs mesures d'intervalle de temps, espacées les unes des autres afin d'éviter que des réflexions multiples dans l'enceinte de cuisson 3 n'altèrent l'écho de l'impulsion suivante.

A titre d'exemple, on peut générer une impulsion sonore pendant une durée limitée, typiquement de 100 microsecondes, et répéter cette émission d'impulsion ultrasonore toutes les 10 millisecondes.

On peut ensuite, à partir de cette mesure du volume de l'aliment, et en fonction de l'écart entre la température de consigne Tc et la température initiale Ti de l'aliment, estimer le temps de chauffage nécessaire pour réchauffer l'aliment à la température de consigne Tc, en fonction notamment de la puissance moyenne fournie par l'élément chauffant 2 de l'appareil.

De manière théorique, il suffit d'apporter l'énergie nécessaire à l'élévation de température de l'aliment pour passer de sa température initiale à sa température de consigne :

$$E = m. \, Cp. \, \Delta T°$$

L'énergie nécessaire E (en Joules), est ainsi dépendante de la masse m de l'aliment (en kg) proportionnelle au volume V d'aliment à chauffer, de la chaleur massique Cp (en J/K-kg) et à l'écart de température $\Delta T°$ (en °K).

L'élément chauffant 2 utilisé dans le four micro-onde 1 ayant une puissance moyenne constante, il suffit de régler la durée de fonctionnement de cet élément chauffant 2 pour doser l'énergie fournie à l'aliment.

Ainsi, en connaissant la puissance P (en Watt) de l'élément chauffant 2, la durée de chauffage estimée peut être calculée de la manière suivante :

$$t = \frac{m.Cp}{P} \times (Tc - Ti)$$

De manière pratique, l'estimation du temps de chauffage t peut être réalisée par interpolation d'une ou plusieurs courbes obtenues pour l'élément chauffant 2 et une température initiale prédéterminée de l'aliment.

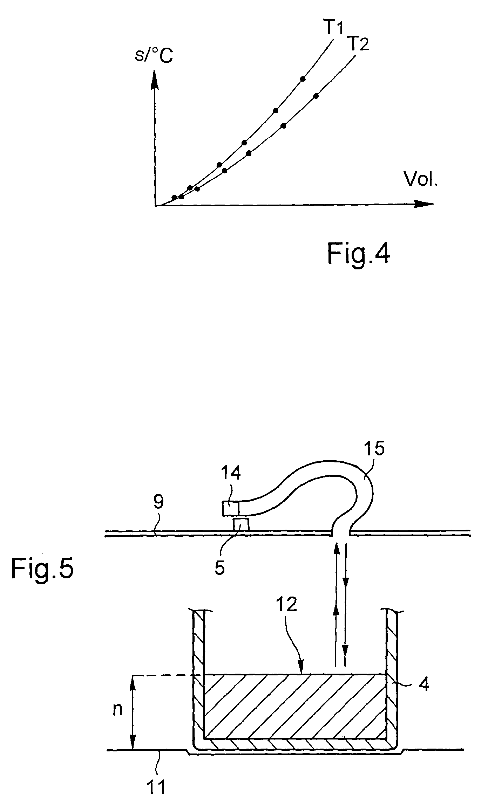

Comme illustré à la figure 4, ces courbes permettent de lier le temps par degré d'élévation de température (s/°C) au volume de l'aliment à chauffer. Ces courbes peuvent être obtenues expérimentalement, en fonction de l'efficacité de l'élément de chauffage 2 du four à micro-onde 1.

Ici, à titre d'exemple, on utilise deux courbes obtenues à des températures initiales différentes T1 et T2.

On va décrire, en référence à la figure 5, un deuxième mode de réalisation de l'invention.

Ici, un élément piezzo-électrique 14 fait à la fois office d'émetteur et de récepteur d'ondes ultrasonores, ce qui permet de réduire le coût de l'appareil.

On utilise tout d'abord l'élément 14 dans sa fonction de générateur d'onde ultrasonore, puis, une fois l'onde émise, l'élément 14 est déconnecté de la source électrique excitatrice, pour être reconnecté à une chaîne de mesure de l'écho réfléchi, auquel cet élément 14 est sensible.

Cependant, afin que la mesure de l'onde réfléchie puisse être effectuée correctement, il est préférable que l'onde ultrasonore générée soit de fréquence égale à la fréquence de résonance mécanique du transducteur de l'élément piezzo-électrique 14.

Or, le transducteur excité sur sa fréquence de résonance, continue de vibrer, une fois la sollicitation stoppée, et cette vibration s'atténue au cours du temps.

Durant cette phase d'atténuation, la mesure de l'écho est impossible.

Il est donc nécessaire de retarder la réception de l'onde réfléchie par l'élément piezzo-électrique 14 en mode récepteur.

Afin d'augmenter la distance entre la surface 12 de l'aliment et l'élément piezzo-électrique 14, sans augmenter les dimensions de l'enceinte 3 ou du four 1, on insère entre l'élément 14 et la paroi supérieure 9 de l'enceinte un guide d'onde 15 (tubulaire par exemple) dont le rôle est de créer un retard dans le parcours de l'onde. Ce retard est déterminé pour être supérieur au temps durant lequel le transducteur continue de vibrer.

Typiquement, si le transducteur vibre durant 1ms, ce temps correspond à une distance parcourue de 0.001s x 340m/s = 34cm. L'onde effectuant un aller-retour, cette distance divisée par 2 correspond à la longueur du guide d'onde 15 à insérer, soit 17 cm.

La mesure du niveau n de remplissage du récipient 4 peut être déterminée comme précédemment, en tenant compte de la longueur supplémentaire créée par le guide d'onde 15 séparant l'élément piezzo-électrique 14 de la paroi supérieure 9 de l'enceinte.

Ainsi, le procédé de chauffage conforme à l'invention permet à partir de la mesure de deux informations avant le réchauffage de l'aliment, de chauffer celui-ci à une température de consigne prédéterminée, de manière fiable.

Ce système est particulièrement bien adapté lorsque l'on souhaite chauffer un biberon de lait, dans lequel on ne veut pas que le lait vienne en contact avec des éléments de mesure extérieurs pour des raisons sanitaires évidentes.

En outre, dans un four à micro-onde, on peut chauffer automatiquement le lait du biberon à une température de consigne préfixée, évitant ainsi toute surchauffe du lait dans le biberon à l'origine de brûlures accidentelles graves des nourrissons.

Bien entendu, de nombreuses modifications peuvent être apportées à l'exemple de réalisation décrit précédemment sans sortir du cadre de l'invention.

Notamment, tout type d'aliment peut être chauffé par ce procédé de chauffage dès lors que l'estimation de la durée de chauffage est réalisée à partir de courbes préétablies expérimentalement pour différents types d'aliments.

A cet effet, l'appareil de chauffage peut comporter un sélecteur d'aliment que l'utilisateur peut utiliser pour régler l'appareil de chauffage en fonction du type d'aliment à chauffer.

En outre, la détermination du volume d'aliment à chauffer peut également être réalisée par la lecture de cette information qui serait introduite par l'utilisateur, au moyen par exemple d'un clavier et d'un écran de visualisation.

En outre, l'appareil de chauffage 1 peut fonctionner avec différents types de récipient de forme prédéfinie dès lors que l'on sait calculer le volume d'aliment contenu dans ce récipient en fonction de son niveau de remplissage.

Enfin, bien que l'exemple décrit précédemment concerne un four à micro-onde, le procédé de chauffage conforme à l'invention peut être adapté à tout type d'appareil de chauffage, y compris un four de cuisson traditionnel.

## Revendications

1. Procédé de chauffage d'un aliment prédéterminé à une température de consigne (Tc), dans lequel on mesure à distance une température initiale (Ti) dudit aliment à chauffer, **caractérisé en ce qu'**il comprend les étapes suivantes :

   - détermination d'un volume (V) d'aliment à chauffer ; et
   - estimation d'une durée de chauffage (t) en fonction de l'écart entre la température de consigne (Tc) et la température initiale (Ti), du volume (V) dudit aliment et de la puissance (P) d'un élément chauffant (2).

2. Procédé de chauffage conforme à la revendication 1, **caractérisé en ce qu'**à l'étape de détermination de volume (V), on mesure le niveau de remplissage (n) d'un récipient de forme prédéfinie (4) contenant ledit aliment.

3. Procédé de chauffage conforme à la revendication 2, **caractérisé en ce que** ladite mesure de niveau de remplissage (n) est effectuée en mesurant la distance (d) séparant la surface de l'aliment (12) dans le récipient de forme prédéfinie (4) et des moyens d'émission (7, 14) et de réception (8, 14) d'une onde ultrasonore.

4. Procédé de chauffage conforme à la revendication 3, **caractérisé en ce que** l'étape de détermination de volume (V) comprend les sous-étapes suivantes :

   - émission d'une onde ultrasonore en direction de la surface (12) de l'aliment;
   - réception d'une onde ultrasonore réfléchie par ladite surface (12) de l'aliment;
   - mesure de l'intervalle de temps (Δt) séparant l'émission de la réception de l'onde ultrasonore ; et
   - calcul de la distance (d) séparant la surface (12) de l'aliment dans le récipient de forme prédéfinie (4) et les moyens d'émission (7, 14) et de réception (8, 14) de l'onde ultrasonore, à partir de l'intervalle de temps mesuré (Δt) et de la vitesse du son.

5. Procédé de chauffage conforme à la revendication 4, **caractérisé en ce qu'**à l'étape d'émission, on génère une impulsion sonore de durée limitée.

6. Procédé de chauffage conforme à l'une des revendications 4 ou 5, **caractérisé en ce qu'**on mesure une valeur moyenne dudit intervalle de temps (Δt) en effectuant plusieurs mesures d'intervalle de temps (Δt), espacées les unes des autres.

**7.** Procédé de chauffage conforme à l'une des revendications 1 à 6, **caractérisé en ce que** l'estimation de la durée de chauffage (t) est réalisée par interpolation d'au moins une courbe obtenue pour un élément chauffant (2) et une température initiale (T1, T2) prédéterminés, liant le temps par degré d'élévation de température au volume dudit aliment prédéterminé.

**8.** Procédé de chauffage conforme à l'une des revendications 1 à 7, **caractérisé en ce que** la mesure à distance de la température initiale (Ti) de l'aliment est réalisée en mesurant la quantité de rayonnement infrarouge émis par la surface (12) de l'aliment.

**9.** Appareil de chauffage d'un aliment, comprenant une enceinte de chauffage (3), un élément chauffant (2) adapté à chauffer ledit aliment, et des moyens de mesure à distance (5) d'une température initiale (Ti) dudit aliment à chauffer, **caractérisé en ce qu'**il comprend :

- des moyens de sélection (6) d'une température de consigne (Tc) pour le chauffage de l'aliment ;
- des moyens de détermination (7, 8, 14) d'un volume (V) d'aliment à chauffer ; et
- des moyens d'estimation (13) adaptés à estimer une durée de chauffage (t) en fonction de l'écart entre la température de consigne (Tc) et la température initiale (Ti), du volume (V) dudit aliment et de la puissance (P) de l'élément chauffant (2).

**10.** Appareil de chauffage conforme à la revendication 9, **caractérisé en ce que** les moyens de détermination de volume comprennent un émetteur (7, 14) et un récepteur (8, 14) d'ondes ultrasonores.

**11.** Appareil de chauffage conforme à la revendication 10, **caractérisé en ce que** ledit émetteur (7, 14) et ledit récepteur (8, 14) d'ondes ultrasonores sont disposés derrière une paroi supérieure (9) de l'enceinte de chauffage (3).

**12.** Appareil de chauffage conforme à l'une des revendications 9 à 11, **caractérisé en ce qu'**il comporte en tant qu'accessoire au moins un récipient (4) de forme prédéfinie, tel qu'un biberon ou un récipient sensiblement cylindrique.

**13.** Appareil de chauffage conforme à l'une des revendications 9 à 12, **caractérisé en ce qu'**il comprend des moyens de positionnement (11, 11a) d'un récipient de forme prédéfinie (4) dans l'enceinte de chauffage (3).

**14.** Appareil de chauffage conforme à la revendication 13, **caractérisé en ce que** les moyens de positionnement (11, 11a) sont adaptés à positionner ledit récipient (4) sensiblement au droit d'un émetteur (7, 14) et d'un récepteur (8, 14) d'ondes ultrasonores et des moyens de mesure à distance (5) de la température initiale (Ti).

**15.** Appareil de chauffage conforme à l'une des revendications 9 à 14, **caractérisé en ce que** les moyens de mesure à distance d'une température initiale (Ti) comprennent une thermopile (5).

**16.** Appareil de chauffage conforme à l'une des revendications 9 à 15, **caractérisé en ce que** l'élément chauffant est un générateur de micro-ondes (2).

**17.** Utilisation d'un appareil de chauffage conforme à l'une des revendications 9 à 16, pour chauffer du lait dans un biberon (4).

Fig. 1

Fig. 2

Fig.3

Fig.4

Fig.5

**Office européen des brevets**

## RAPPORT DE RECHERCHE EUROPEENNE

Numéro de la demande

EP 01 40 1574

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 622 973 A (TOKYO SHIBAURA ELECTRIC CO) 2 novembre 1994 (1994-11-02) | 1,8-11, 16,17 | H05B6/68 |
| Y | * page 4, ligne 29 - ligne 45 * <br> * page 5, ligne 43 - ligne 51 * <br> * page 6, ligne 54 - page 7, ligne 10 * <br> * page 7, ligne 58 - page 8, ligne 1; figures 1,3 * | 12,13,15 | |
| Y | US 5 315 084 A (JENSEN MARTIN) 24 mai 1994 (1994-05-24) * figures * | 12,13 | |
| Y | GB 2 314 173 A (LG ELECTRONICS INC) 17 décembre 1997 (1997-12-17) * page 1, ligne 7 - ligne 14 * * page 15, ligne 17 - ligne 22 * | 15 | |
| A | DE 195 44 071 A (NOVOTECH ELEKTRONIK GES M B H) 28 mai 1997 (1997-05-28) * revendication 1 * | 2 | |
| A | US 5 447 077 A (LAUTENSCHLAEGER WERNER) 5 septembre 1995 (1995-09-05) * colonne 7, ligne 9; revendication 14; figures 1,24 * | 12,13 | **DOMAINES TECHNIQUES RECHERCHES (Int.Cl.7)** <br> H05B <br> G01F |

Le présent rapport a été établi pour toutes les revendications

| Lieu de la recherche | Date d'achèvement de la recherche | Examinateur |
|---|---|---|
| LA HAYE | 18 juillet 2001 | Castanheira Nunes, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 01 40 1574

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2001

| Document brevet cité au rapport de recherche | Date de publication | Membre(s) de la famille de brevet(s) | Date de publication |
|---|---|---|---|
| EP 0622973 A | 02-11-1994 | JP 6307645 A | 01-11-1994 |
| | | DE 69414166 D | 03-12-1998 |
| | | KR 146851 B | 17-08-1998 |
| US 5315084 A | 24-05-1994 | AUCUN | |
| GB 2314173 A | 17-12-1997 | KR 186390 B | 20-03-1999 |
| | | US 6013907 A | 11-01-2000 |
| | | BR 9703528 A | 06-10-1998 |
| | | CN 1172229 A | 04-02-1998 |
| | | GB 2324889 A,B | 04-11-1998 |
| | | JP 10096517 A | 14-04-1998 |
| DE 19544071 A | 28-05-1997 | AT 401687 B | 25-11-1996 |
| | | AT 115392 A | 15-03-1996 |
| US 5447077 A | 05-09-1995 | DE 4223116 A | 04-11-1993 |
| | | AT 177199 T | 15-03-1999 |
| | | DE 9321612 U | 14-12-2000 |
| | | DE 59309405 D | 08-04-1999 |
| | | WO 9322650 A | 11-11-1993 |
| | | EP 0592654 A | 20-04-1994 |
| | | DE 4319498 A | 03-11-1994 |

EPO FORM P0460

Pour tout renseignement concernant cette annexe : voir Journal Officiel de l'Office européen des brevets, No.12/82